# FASCICULE DE BREVET EUROPEEN

(11) **EP 2 458 770 B1**
(45) Date de publication et mention de la délivrance du brevet: **02.11.2016**
(21) Numéro de dépôt: 11191301.8
(22) Date de dépôt: 30.11.2011
(51) Int. Cl.: H04L 5/00, H04L 5/06

(54) **PROCEDE ET SYSTEME DE COMMUNICATION ADAPTATIVES EN BANDE HF**
Verfahren und System zur adaptativen Kommunikation im HF-Bandbereich
Adaptive communication method and system in HF band

(30) Priorité: 30.11.2010 FR 1004650
(43) Date de publication de la demande: 30.05.2012
(73) Titulaire: Thales, 92400 Courbevoie (FR)
(72) Inventeur: Lamy-Bergot, Catherine, 92700 COLOMBES (FR); Crambert, Philippe, 92700 COLOMBES (FR); Multedo, Gilbert, 92700 COLOMBES (FR); Merel, Dominique, 92700 COLOMBES (FR); Gaschi, Jean-François, 92700 COLOMBES (FR)
(74) Mandataire: Lucas, Laurent Jacques

(56) Documents cités:
- EP-A1- 1 492 280

## Description

L'invention concerne le domaine des radiocommunications dans la bande de fréquences HF (« Hautes Fréquences») qui va de 3 MHz à 30 MHz. L'invention se rapporte plus précisément à l'augmentation de débit pour de telles communications.

Les liaisons HF offrent une capacité hors ligne de vue qui permet de réaliser des communications à longue voire très longue distance sans nécessiter le recours à un satellite pour effectuer un relai de la transmission.

Les ondes radios dont la fréquence est comprise dans la bande HF, encore appelées ondes décamétriques en référence à leur longueur d'onde qui est comprise entre 10 et 100 mètres, se propagent le plus souvent selon deux modes alternatifs.

Dans un premier mode de propagation, dit ionosphérique, les ondes radios HF subissent une réflexion sur les différentes couches de l'ionosphère. Ces couches n'étant pas stables dans le temps ni dans l'espace, elles entrainent de fortes variations du canal de propagation ce qui provoque des instabilités et donc une baisse du débit disponible. La capacité de liaisons HF se propageant dans un mode ionosphérique est ainsi limitée en termes de débit de transmission disponible.

Dans un second mode de propagation, dit de surface, les ondes radios HF se propagent en ondes de sol. La distance maximale de propagation dépend alors fortement de la composition de la surface terrestre sur le trajet entre l'émetteur et le récepteur. En effet, une surface très conductive, comme l'eau salée par exemple, offre une portée bien supérieure à un sol de type rocheux par exemple. Si les types de surface varient bien moins dans le temps que les couches de l'ionosphère, la propagation des ondes radios HF en mode de surface reste très variable d'un endroit à un autre du globe. Cet aspect présente un impact notamment en cas de mobilité de l'émetteur ou du récepteur.

Les fréquences disponibles dans la bande HF sont allouées aux divers utilisateurs par l'Union Internationale des Télécommunications (UIT). Une canalisation classiquement utilisée par des systèmes de communications HF en onde de sol ou en onde ionosphérique est de l'ordre de 3 KHz éventuellement doublée pour passer à 6kHz. Le mode de modulation couramment utilisé est celui de la bande latérale unique BLU ou « Single Side Bande » SSB en anglais. Cette canalisation est imposée par les standards définissant les formes d'ondes HF.

La limitation de largeur de bande imposée par la canalisation de 3 kHz pose le problème de la limitation du débit utile qui peut être envisagé pour une transmission HF. Du fait de la faible largeur de bande, mais également des limitations induites par le canal de propagation ionosphérique ou en onde de surface, les débits atteints ne dépassent pas la dizaine de kilobits par seconde. A titre d'exemple, la valeur typique maximale des standards actuels est de 9600 bits par seconde pour 3 kHz de bande passante. Pour des applications nécessitant des ressources plus élevées, telles que les applications internet ou de visiophonie par exemple, le débit utile proposé par les formes d'ondes HF existantes n'est pas suffisant.

De plus, les bandes de fréquences allouées à un même utilisateur ne sont en général pas contigües et sont réparties dans l'ensemble de la bande HF selon un plan de fréquence imposé.

Le problème se pose donc de l'augmentation du débit utile tout en respectant les contraintes spécifiques des communications HF et particulièrement des communications HF en mode ionosphérique.

Une solution connue permettant de lutter contre les instabilités du canal de propagation HF consiste à effectuer une recherche automatique de fréquence disponible parmi celles allouées à l'utilisateur. Cette procédure est effectuée de façon initiale ou après rupture de la communication d'un lien mais ne permet pas de prendre en compte finement et de façon dynamique l'évolution temporelle de la disponibilité du médium.

L'augmentation du débit utile est envisagée classiquement selon deux méthodes. Une première solution iso-bande consiste à conserver la canalisation imposée et à augmenter l'efficacité spectrale de la modulation et/ou le rendement du codage correcteur protégeant la communication contre les instabilités du canal. Cette solution présente une limite théorique en débit atteignable imposée par la canalisation et de plus l'augmentation du rendement du codage correcteur pénalise la liaison en réduisant la portée et la probabilité d'établissement de la communication.

Une seconde solution consiste à augmenter la largeur de la canalisation en prenant en compte les canaux adjacents. Cette solution présente plusieurs inconvénients. Tout d'abord la complexité des systèmes, émetteurs et récepteurs, est accrue avec l'augmentation de la bande de fréquence utile. Pour l'émetteur, la réalisation du filtre de mise en forme large bande et surtout celle de l'amplificateur de puissance et du synthétiseur de fréquences est d'autant plus complexe que la bande de fréquence est grande. Pour le récepteur, c'est la réalisation de l'égaliseur qui est rendue plus complexe avec l'augmentation de la bande utile. D'autre part, les canaux contigus ne sont pas, le plus souvent, ceux qui présentent la meilleure disponibilité physique et peuvent être impactés par les perturbations liées à la couche ionosphérique déjà mentionnées. En effet, le medium HF étant très fluctuant, il est peu probable d'avoir un grand nombre de canaux contigus disponibles physiquement et qui permettraient d'obtenir les débits utiles envisagés. Enfin, d'un point de vue légal, les bandes de fréquences allouées à un utilisateur par l'ITU ne peuvent aisément être modifiées pour exploiter plusieurs bandes contigües. Au contraire le plan de fréquences alloué correspond le plus souvent à un ensemble de fréquences réparties dans l'ensemble de la bande HF de façon à pouvoir sécuriser les transmissions par l'application de méthodes de saut de fréquence ou de limiter la probabilité d'utiliser une fréquence qui soit perturbée.

Afin de résoudre les limitations précitées des solutions connues, l'invention propose une approche permettant d'augmenter la bande de fréquence utile sans exploiter de canaux contigus et sans augmenter significativement la complexité des équipements.

L'invention a ainsi pour objet un procédé de communications adaptatives dans une bande de fréquences HF caractérisé en ce qu'il comporte au moins les étapes suivantes :
o la détermination d'une sous-bande utile S disponible pour une transmission dans la bande HF, en fonction d'au moins un des deux critères suivants :
   ▪ le nombre de fréquences allouées à l'utilisateur comprises dans la sous-bande utile S selon ledit plan d'allocation de fréquences,
   ▪ la disponibilité physique de la sous-bande utile S évaluée en fonction d'une prédiction des perturbations induites sur le signal par les réflexions sur les couches ionosphériques.
o la sélection dans la sous-bande utile S, d'un ensemble de n canaux fréquentiels de largeur identique en fonction d'un plan d'allocation de fréquences et de la qualité de la liaison de chacun desdits canaux,
o la transmission simultanée sur les n canaux fréquentiels d'un signal respectant une forme d'onde HF.

Dans une variante de réalisation de l'invention, la qualité de la liaison de chacun desdits canaux est estimée au moins à partir des sous-étapes suivantes :
o la mesure de la puissance du signal reçu, en l'absence de communication, dans chaque canal fréquentiel que comporte la sous-bande utile S,
o l'attribution d'une note de qualité à chacun desdits canaux fréquentiels en fonction de la comparaison de ladite puissance à un ou plusieurs seuils prédéterminés, ladite qualité étant décroissante avec la croissance de la puissance,
o la sélection des n canaux présentant les notes de qualité les plus élevées.

Dans une variante de réalisation de l'invention, la sélection dudit ensemble de n canaux fréquentiels est mise à jour périodiquement ou dès que la note de qualité d'un canal sélectionné est dégradée.

Dans une variante de réalisation le procédé selon l'invention comporte en outre l'étape de test suivante :
o déterminer le nombre de canaux fréquentiels pour lesquels la qualité de la liaison est supérieure à un seuil minimum requis pour qu'une transmission soit possible sur ces canaux,
o si ledit nombre est inférieur au nombre n de canaux requis pour la transmission, déterminer une autre sous-bande utile S disponible.

Dans une variante de réalisation de l'invention, la qualité de la liaison de chacun desdits canaux est estimée en outre à l'aide d'une mesure de la puissance moyenne du signal reçu sur une période de temps antérieure.

Dans une variante de réalisation de l'invention, la largeur d'un canal fréquentiel est égale à 3 kHz.

L'invention a également pour objet un système de communications en bande HF comportant au moins un émetteur HF et un récepteur HF adaptés à émettre et recevoir un signal de forme d'onde HF caractérisé en ce que :
o ledit récepteur HF comporte des moyens pour déterminer une sous-bande utile S disponible pour une transmission dans la bande HF, et pour sélectionner, dans la sous-bande utile S, un ensemble de n canaux fréquentiels de largeur identique en fonction d'un plan d'allocation de fréquences et de la qualité de la liaison de chacun desdits canaux et transmettre audit émetteur HF ledit ensemble de n canaux fréquentiels sélectionnés,
o ledit émetteur HF comporte des moyens pour recevoir un ensemble de n canaux fréquentiels sélectionnés et transmettre simultanément sur les n canaux fréquentiels un signal respectant ladite forme d'onde HF,
o ledit système de communications comportant en outre des moyens pour mettre en oeuvre le procédé de communications adaptatives selon l'invention.

D'autres caractéristiques et avantages de l'invention apparaîtront à l'aide de la description qui suit faite en regard des dessins annexés qui représentent :
- la figure 1, une illustration du principe d'utilisation de canaux non contigus selon l'invention,
- la figure 2, une illustration de la mise en oeuvre du procédé selon l'invention,
- la figure 3, un organigramme décrivant les étapes de mise en oeuvre du procédé selon l'invention,
- la figure 4, un synoptique d'un système de communications en bande HF selon l'invention.

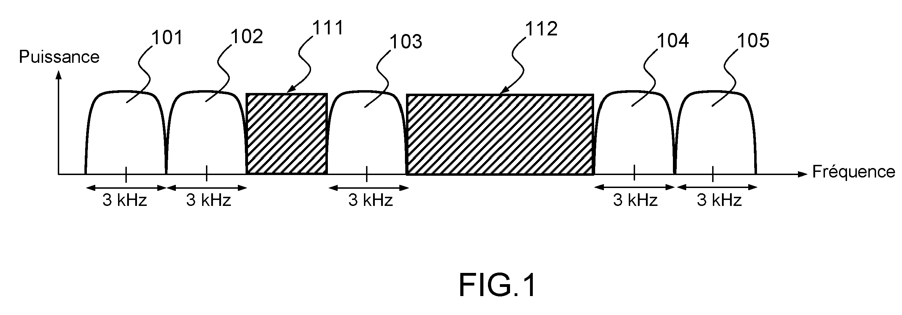

La figure 1 représente un exemple d'exploitation du spectre fréquentiel HF selon l'invention. De façon à augmenter la bande passante disponible et donc le débit utile, l'invention consiste à sélectionner, dynamiquement, un ensemble de bandes de fréquences en fonction de la qualité, à un instant donné, de la transmission sur ces bandes de fréquences. Les bandes sélectionnées ne sont pas forcément contigües mais prises dans l'ensemble des fréquences allouées à l'utilisateur. Certaines bandes de fréquences peuvent également être réservées à d'autres services et sont à cet effet exclues de la sélection. La figure 1 représente le spectre fréquentiel en bande HF. Les bandes de fréquences 101,102,103,104,105, de largeurs identiques égales à 3 kHz sont sélectionnées à un instant donné pour la transmission. Les bandes de fréquences 111,112 ne sont pas exploitées car la qualité estimée de la transmission sur ces dernières ne permet pas d'atteindre un débit optimum. Dans l'exemple de la figure 1, la bande de fréquences allouée à la communication HF est augmentée de 3 kHz à 15 kHz, la transmission s'effectuant en parallèle sur toutes les fréquences sélectionnées.

Le procédé selon l'invention, dont un but est d'augmenter la bande passante disponible pour la transmission HF, comporte notamment les étapes suivantes. Dans un premier temps une sous-partie S de la bande de fréquences HF est choisie. La largeur de cette sous-bande S est un multiple de la canalisation d'une transmission HF. Préférentiellement, la canalisation est égale à 3 kHz et la largeur de la sous-bande S est donc un multiple de 3 kHz. La largeur totale de la sous-bande S est limitée de façon à ne pas complexifier les équipements, en particulier les filtres de mise en forme, l'amplificateur en émission, et la boîte d'accord de l'antenne ainsi que l'égaliseur en réception. Pour une canalisation de 3 kHz, un bon compromis entre complexité et augmentation du débit consiste, par exemple, à choisir une sous-bande de largeur 200 kHz. La sous-bande S est définie à partir d'éléments de planification, c'est-à-dire en fonction des bandes de fréquences allouées à l'utilisateur. Par exemple, la sous-bande S doit contenir un maximum de fréquences allouées à l'utilisateur. Le choix est également effectué en fonctions de prédictions de la qualité de la transmission à partir de modèles des couches ionosphériques en fonction du temps et de la fréquence. Ces modèles peuvent être déterminés, par exemple, à l'aide d'un logiciel de prédiction de la propagation des ondes HF et d'analyse des couches ionosphériques tel que le logiciel connu VOACAP ou par une analyse de l'ionosphère par une méthode de tomographie en trois dimensions.

Lorsque la sous-bande S est définie, le procédé selon l'invention consiste dans un deuxième temps à sélectionner un nombre n de canaux parmi l'ensemble des canaux disponibles dans la sous-bande S. Le nombre n est fixé en fonction du facteur d'augmentation de bande passante, et indirectement de débit utile, désiré.

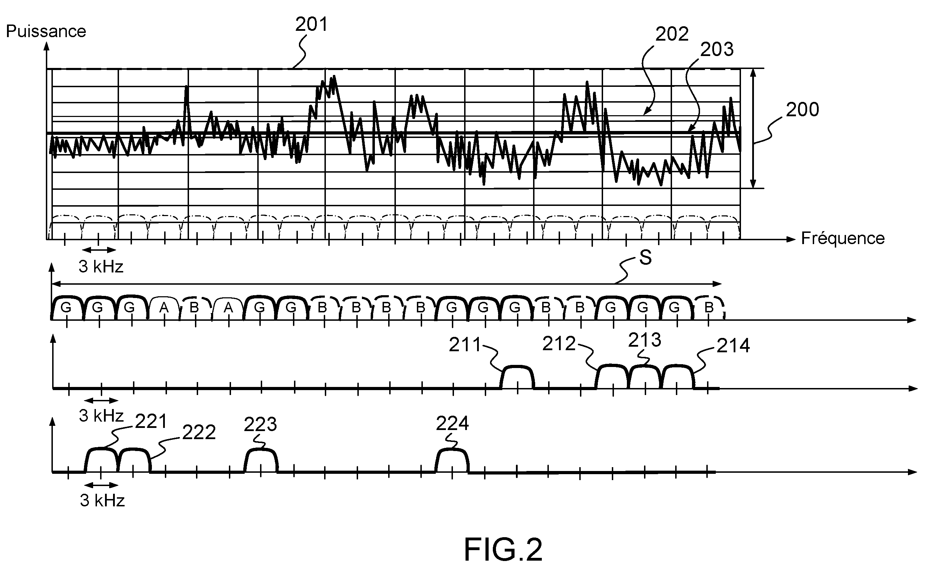

La figure 2 illustre un exemple de réalisation de la sélection des n canaux selon l'invention.

Tout d'abord une analyse du spectre de la sous-bande S est réalisée. La puissance du signal reçu dans toute la sous-bande S est mesurée, en l'absence de transmission, canaux par canaux, afin de déterminer une note de qualité de la transmission dans chaque canal. Cette mesure est effectuée par le récepteur avec un convertisseur analogique numérique de dynamique 200 et de valeur de saturation 201 connues.

Dans une variante de réalisation de l'invention, la note de qualité de la transmission peut également prendre en compte une valeur de la puissance moyenne du signal au cours d'une période de temps passée. Cette puissance moyenne est exploitable uniquement si sa mesure est réalisée sur une période de temps pour laquelle les conditions d'émission et de réception sont comparables avec celles observées pour la mesure de la puissance instantanée du signal. Par conditions comparables, on entend des conditions similaires du point de vue géographique comme du point de vue ionosphérique. Par exemple, Il convient de ne pas comparer des mesures réalisées le jour avec d'autres réalisées la nuit. En effet la couche D de l'ionosphère se dissipe la nuit ce qui peut entrainer des fluctuations sur la puissance moyenne du signal.

Dans une autre variante de réalisation de l'invention, la mesure de la puissance instantanée du signal est pondérée par des allocations préférentielles à différents services. Par exemple si l'on dispose de fréquences attribuées en propre et d'autres en accès partagé, on pourra favoriser l'utilisation des fréquences en propre.

Une fois la note de qualité de la transmission dans chaque canal établie, au moins un seuil 202,203 de comparaison à cette note de qualité est fixé au delà duquel le canal est considéré comme perturbé et donc non disponible. En pratique, plusieurs seuils 202,203 peuvent être envisagés afin de définir des notes de qualité croissantes en fonction de la puissance des signaux parasites mesurée dans le canal fréquentiel. Dans l'exemple de la figure 2, deux seuils 202,203 sont fixés. Le seuil 203 correspond à la puissance maximale de signaux parasites supportables pour que la qualité de la communication utile soit bonne. Le seuil 202 correspond à une qualité moyenne avec un signal de communication affecté en partie par les perturbations de l'ionosphère. Lorsque la puissance mesurée dépasse le seuil 203, le canal correspondant est trop impacté par les bruits parasites, notamment liés aux réflexions d'autres signaux sur les couches de l'ionosphère, pour être exploitable.

Lorsque l'analyse du spectre est effectuée pour l'ensemble des canaux de la sous-bande S, une note de qualité est attribuée à chaque canal, identifié par sa fréquence centrale. Dans l'exemple de la figure 2, deux seuils sont utilisés induisant trois notes de qualité croissante B, A et G. Ensuite, à un instant t₁, les canaux 211,212,213,214 sont sélectionnés de façon à augmenter la bande passante d'un facteur quatre. Ces canaux sont choisis au moins en fonction de leur note de qualité et parmi les fréquences effectivement allouées par l'ITU à l'utilisateur. A un autre instant t₂, de façon dynamique, d'autres canaux 221,222,223,224 sont sélectionnés si la note de qualité des canaux précédents est dégradée.

Le récepteur large bande selon l'invention numérise instantanément l'ensemble de la sous-bande S. Dans le cas où un canal particulièrement perturbé amènerait une dégradation trop forte de la sensibilité en réception le récepteur selon l'invention peut être contraint à rechercher une nouvelle sous-bande S.

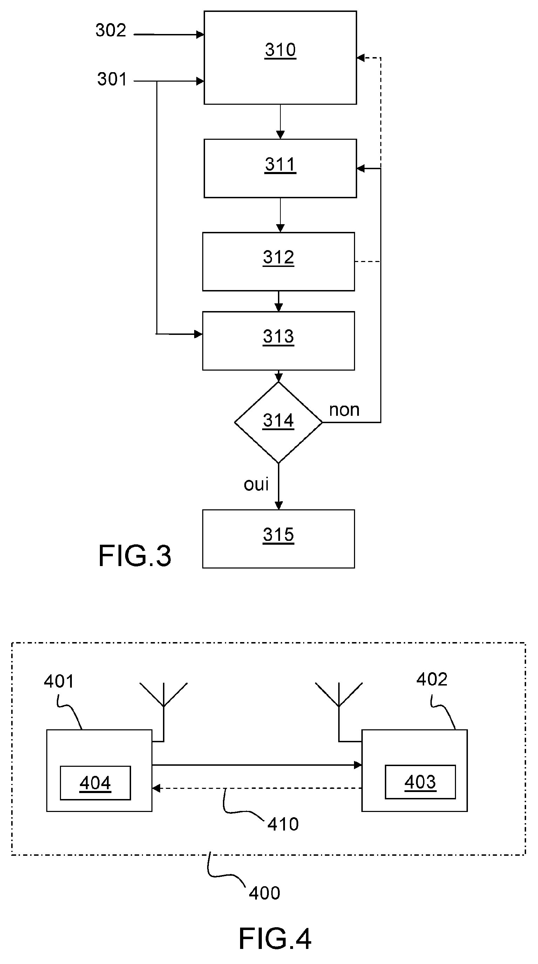

La figure 3 décrit un organigramme regroupant les étapes de mise en oeuvre du procédé selon l'invention à un instant t donné. Dans une première étape 310, la sous-bande utile S est choisie dans la bande de fréquences HF à partir d'au moins le plan d'allocations de fréquences 301 de l'utilisateur et de prédictions 302 de la qualité de la transmission dans les différents canaux fréquentiels de la bande HF. Dans une deuxième étape 311, une évaluation des canaux, de largeur spectrale donnée égale par exemple à 3 kHz, est effectuée pour déterminer s'ils peuvent supporter une communication. Une note de qualité est attribuée à chaque canal de la sous-bande utile S. Dans une troisième étape 312, un test est réalisé sur le nombre de canaux qui peuvent supporter une communication. Pratiquement, les canaux pour lesquels la note de qualité est inférieure à un seuil minimum sont éliminés du procédé car ils ne présentent pas la disponibilité minimum requise pour la transmission d'une communication. Si le nombre de canaux retenus est inférieur au nombre de canaux n_min minimum requis pour la transmission, le procédé retourne à l'étape 310 pour rechercher une nouvelle sous-bande S qui présente une meilleure disponibilité. Si le nombre de canaux disponibles est supérieur au nombre n_min de canaux minimum mais inférieur au nombre n de canaux désiré, la communication peut tout de même être établie dans un mode dégradé. La durée de fonctionnement dans un mode dégradé peut être limitée dans le temps. Alternativement, plusieurs évaluations successives peuvent être réalisées sur la même sous-bande S avant de retourner à l'étape 310.

Dans une quatrième étape 313, un nombre n de canaux est sélectionné en fonction au moins de la note de qualité qui leur est attribuée et du plan d'allocations de fréquences 301. Dans une cinquième étape 314, les n canaux sélectionnés à un instant t sont comparés avec les n canaux sélectionnés et mémorisés à un instant t-1 antérieur. Dans une sixième étape 315, si au moins un canal, parmi les n canaux sélectionnés, est modifié entre l'instant antérieur t-1 et l'instant ultérieur t, alors les n canaux sélectionnés sont transmis à l'émetteur pour une prochaine phase d'émission. Si les n canaux sélectionnés n'ont pas été modifiés entre les instant t-1 et t, alors le procédé boucle à l'étape 311 d'évaluation des canaux de la sous-bande utile S.

La figure 4 représente un synoptique d'un système de communications en bande HF selon l'invention.

L'analyse du spectre ainsi que la sélection des n canaux dans la sous-bande S est effectuée par le récepteur 402 qui transmet, périodiquement, ces informations à l'émetteur par l'intermédiaire d'une voie de retour 410. Dès que l'émetteur 401 a reçu l'information des n canaux fréquentiels sur lesquels il peut émettre, il effectue une transmission simultanée sur tous les n canaux disponibles. Le signal transmis respecte une forme d'onde HF connue et est multiplexé sur les n canaux afin de permettre une augmentation du débit utile d'un facteur n. La puissance émise est concentrée sur ces n canaux et n'est pas étalée dans toute la sous-bande S. Lorsqu'un changement de canaux fréquentiels intervient, du fait d'un changement de la note de qualité d'un canal utilisé, le récepteur 402 détermine un nouveau canal disponible et transmet sa fréquence centrale à l'émetteur 401. Les horloges de l'émetteur et du récepteur sont synchronisées de façon à basculer de façon synchrone sur le nouveau plan de fréquences. Le récepteur 402 comporte ainsi des moyens 403 adaptés à mettre en oeuvre le procédé de sélection de n canaux fréquentiels dans une sous-bande S. L'émetteur 401 comporte des moyens 404 adaptés à la réception de l'information spécifiant les n canaux fréquentiels sur lesquels émettre.

L'analyse du spectre ainsi que la sélection des n canaux dans la sous-bande S est effectuée par le récepteur qui transmet, périodiquement, ces informations à l'émetteur par l'intermédiaire d'une voie de retour. Dès que l'émetteur a connaissance des fréquences sur lesquelles il peut émettre, il effectue une transmission simultanée sur tous les n canaux disponibles. Le signal transmis respecte une forme d'onde HF connue et est multiplexé sur les n canaux afin de permettre une augmentation du débit utile d'un facteur n. La puissance émise est concentrée sur ces n canaux et n'est pas étalée dans toute la sous-bande S. Lorsqu'un changement de canaux fréquentiels intervient, du fait d'un changement de la note de qualité d'un canal utilisé, le récepteur détermine un nouveau canal disponible et transmet sa fréquence centrale à l'émetteur. Les horloges de l'émetteur et du récepteur sont synchronisées de façon à basculer de façon synchrone sur le nouveau plan de fréquences.

Le procédé et le système selon l'invention présentent les avantages suivants. L'augmentation de la bande passante et du débit utile se fait en prenant en compte l'évolution temporelle de la disponibilité physique de chaque canal soumis à des perturbations principalement liées aux réflexions de signaux sur les couches de l'ionosphère, aux communications dans des canaux voisins, ou aux changements liés à un déplacement de l'émetteur ou du récepteur communiquant en onde de surface. L'invention permet une augmentation des ressources spectrales tout en respectant le plan d'allocation de fréquences dans la bande HF pour un utilisateur donné. L'invention permet également une augmentation du débit utile sans dégrader la portée de la transmission et la probabilité d'établissement de la liaison.

## Revendications

1. Procédé de communications adaptatives dans une bande de fréquences HF comportant les étapes suivantes :
o la détermination (310,312) d'une sous-bande utile S disponible pour une transmission dans la bande HF, en fonction d'au moins un des deux critères suivants :
▪ le nombre de fréquences allouées à l'utilisateur comprises dans la sous-bande utile S selon ledit plan d'allocation de fréquences,
▪ la disponibilité physique de la sous-bande utile S évaluée en fonction d'une prédiction des perturbations induites sur le signal par les réflexions sur les couches ionosphériques.
o la sélection (311,313,314,315) dans la sous-bande utile S, d'un ensemble de n canaux fréquentiels de largeur identique en fonction d'un plan d'allocation de fréquences et de la qualité de la liaison de chacun desdits canaux,
o la transmission simultanée sur les n canaux fréquentiels d'un signal respectant une forme d'onde HF,
ledit procédé étant **caractérisé en ce que** :
o la qualité de la liaison de chacun desdits canaux est estimée au moins à partir des sous-étapes suivantes :
▪ la mesure (311) de la puissance du signal reçu, en l'absence de communication, dans chaque canal fréquentiel que comporte la sous-bande utile S,
▪ l'attribution (311) d'une note de qualité à chacun desdits canaux fréquentiels en fonction de la comparaison de ladite puissance à un ou plusieurs seuils prédéterminés, ladite qualité étant décroissante avec la croissance de la puissance,
▪ la sélection (313) des n canaux présentant les notes de qualité les plus élevées,
o ledit procédé comporte en outre l'étape (312) de test suivante :
▪ déterminer le nombre de canaux fréquentiels pour lesquels la qualité de la liaison est supérieure à un seuil minimum requis pour qu'une transmission soit possible sur ces canaux,
▪ si ledit nombre est inférieur au nombre n de canaux requis pour la transmission, déterminer (310) une autre sous-bande utile S disponible.

2. Procédé selon la revendication 1 **caractérisé en ce que** la sélection dudit ensemble de n canaux fréquentiels est mise à jour périodiquement ou dès que la note de qualité d'un canal sélectionné est dégradée.

3. Procédé selon l'une des revendications précédentes **caractérisé en ce que** la qualité de la liaison de chacun desdits canaux est estimée en outre à l'aide d'une mesure de la puissance moyenne du signal reçu sur une période de temps antérieure.

4. Procédé selon l'une des revendications précédentes **caractérisé en ce que** la largeur d'un canal fréquentiel est égale à 3 kHz.

5. Système de communications en bande HF comportant au moins un émetteur HF (401) et un récepteur HF (402) adaptés à émettre et recevoir un signal de forme d'onde HF **caractérisé en ce que** :
o ledit récepteur HF (402) comporte des moyens (403) pour déterminer une sous-bande utile S disponible pour une transmission dans la bande HF, et pour sélectionner, dans la sous-bande utile S, un ensemble de n canaux fréquentiels de largeur identique en fonction d'un plan d'allocation de fréquences et de la qualité de la liaison de chacun desdits canaux et transmettre (410) audit émetteur HF (401) ledit ensemble de n canaux fréquentiels sélectionnés,
o ledit émetteur HF (401) comporte des moyens (404) pour recevoir un ensemble de n canaux fréquentiels sélectionnés et transmettre simultanément sur les n canaux fréquentiels un signal respectant ladite forme d'onde HF,
o ledit système de communications comportant en outre des moyens pour mettre en oeuvre le procédé de communications adaptatives selon l'une des revendications 1 à 4.

## Patentansprüche

1. Verfahren für adaptive Kommunikationen in einem HF-Frequenzband, das die folgenden Schritte beinhaltet:
∘ Bestimmen (310, 312) eines nützlichen Subbandes S, das für eine Übertragung im HF-Band zur Verfügung steht, in Abhängigkeit von wenigstens einem der zwei folgenden Kriterien:
▪ der Anzahl von dem Benutzer zur Verfügung stehenden Frequenzen, die in dem nützlichen Subband S gemäß dem Frequenzzuordnungsplan enthalten sind;
▪ der physischen Verfügbarkeit des nützlichen Subbandes S, beurteilt in Abhängigkeit von einer Prädiktion der an dem Signal durch die Reflexionen an den ionosphärischen Schichten induzierten Interferenzen;
∘ Auswählen (311, 313, 314, 315), in dem nützlichen Subband S, eines Satzes von n Frequenzkanälen von identischer Breite in Abhängigkeit von einem Frequenzzuordnungsplan und von der Qualität der Verbindung jedes der Kanäle;
∘ gleichzeitiges Übertragen, auf den n Frequenzkanälen, eines Signals mit einer HF-Wellenform,
wobei das Verfahren **dadurch gekennzeichnet ist, dass**:
∘ die Qualität der Verbindung jedes der Kanäle wenigstens auf der Basis der folgenden Teilschritte geschätzt wird:
▪ Messen (311) der Leistung des empfangenen Signals in Abwesenheit von Kommunikation in jedem Frequenzkanal, den das nützliche Subband S umfasst;
▪ Zuordnen (311) einer Qualitätsbewertung zu jedem der Frequenzkanäle in Abhängigkeit von dem Vergleich der Leistung mit einer oder mehreren vorbestimmten Schwellen, wobei die Qualität mit zunehmender Leistung abnimmt;
▪ Auswählen (313) der n Kanäle mit den höchsten Qualitätswertungen;
∘ wobei das Verfahren ferner den folgenden Testschritt (312) beinhaltet:
▪ Bestimmen der Anzahl von Frequenzkanälen, für die die Qualität der Verbindung höher ist als eine Mindestschwelle, die notwendig ist, damit eine Übertragung auf diesen Kanälen möglich ist;
▪ Bestimmen (310) eines weiteren verfügbaren nützlichen Subbandes S, wenn die Anzahl geringer ist als die Anzahl n von für die Übertragung benötigten Kanälen.

2. Verfahren nach Anspruch 1, **dadurch gekennzeichnet, dass** die Wahl des Satzes von n Frequenzkanälen periodisch aktualisiert wird oder sobald die Qualitätswertung eines gewählten Kanals herabgesetzt ist.

3. Verfahren nach einem der vorherigen Ansprüche, **dadurch gekennzeichnet, dass** die Qualität der Verbindung jedes der Kanäle ferner mit Hilfe einer Messung der mittleren Leistung des empfangenen Signals über eine vorherige Zeitperiode geschätzt wird.

4. Verfahren nach einem der vorherigen Ansprüche, **dadurch gekennzeichnet, dass** der Frequenzkanal 3 kHz breit ist.

5. Kommunikationssystem im HF-Band, das wenigstens einen HF-Sender (401) und einen HF-Empfänger (402) umfasst, zum Senden und Empfangen eines Signals mit einer HF-Wellenform, **dadurch gekennzeichnet, dass**:
∘ der HF-Empfänger (402) Mittel (403) zum Bestimmen eines nützlichen Subbandes S, das für eine Übertragung im HF-Band zur Verfügung steht, und zum Auswählen, in dem nützlichen Subband S, eines Satzes von n Frequenzkanälen von identischer Breite in Abhängigkeit von einem Frequenzzuordnungsplan und von der Qualität der Verbindung jedes der Kanäle und zum Übertragen (410) des Satzes von n gewählten Frequenzkanälen zu dem HF-Sender (401) umfasst;
∘ der HF-Sender (401) Mittel (404) zum Empfangen eines Satzes von n gewählten Frequenzkanälen umfasst und gleichzeitig ein Signal mit der HF-Wellenform auf den n Frequenzkanälen überträgt;
∘ wobei das Kommunikationssystem ferner Mittel zum Implementieren des Verfahrens für adaptive Kommunikationen nach einem der Ansprüche 1 bis 4 umfasst.

## Claims

1. A method for adaptive communication in an HF frequency band, comprising the following steps:
∘ determining (310, 312) a useful sub-band S that is available for transmission in the HF band as a function of at least one of the following two criteria:
▪ the number of frequencies allocated to the user included in the useful sub-band S according to said frequency allocation plan;
▪ the physical availability of the useful sub-band S that is assessed as a function of a prediction of any interference induced on the signal by the reflections on the ionospheric layers;
∘ selecting (311, 313, 314, 315) from the useful sub-band S a set of n frequency channels of identical width as a function of a frequency allocation plan and of the quality of the link of each of said channels;
∘ simultaneously transmitting on the n frequency channels a signal having an HF waveform,
said method being **characterised in that**:
∘ the quality of the link of each of said channels is estimated at least on the basis of the following sub-steps:
▪ measuring (311) the power of the received signal, in the absence of communication, in each frequency channel that makes up the useful sub-band S;
▪ attributing (311) a quality score to each of said frequency channels as a function of the comparison of said power to one or more predetermined thresholds, said quality decreasing with the increase in the power;
▪ selecting (313) the n channels having the highest quality scores;
∘ said method further comprising the following test step (312):
▪ determining the number of frequency channels, for which the quality of the link is higher than a minimum threshold that is required in order for a transmission to be possible on these channels;
▪ determining (310) a further available useful sub-band S if said number is lower than the number n of channels required for the transmission.

2. The method according to claim 1, **characterised in that** selecting said set of n frequency channels is updated periodically or as soon as the quality score of a selected channel is degraded.

3. The method according to any one of the preceding claims, **characterised in that** the quality of the link of each of said channels is further estimated using a measurement of the average power of the received signal over a previous period of time.

4. The method according to any one of the preceding claims, **characterised in that** the frequency channel is 3 kHz wide.

5. An HF band communication system comprising at least one HF transmitter (401) and one HF receiver (402) adapted to transmit and receive an HF waveform signal, **characterised in that**:
∘ said HF receiver (402) comprises means (403) for determining a useful sub-band S that is available for transmission in the HF band and for selecting, in the useful sub-band S, a set of n frequency channels of identical width as a function of a frequency allocation plan and of the quality of the link of each of said channels, and transmitting (410) said set of n selected frequency channels to said HF transmitter (401);
∘ said HF transmitter (401) comprises means (404) for receiving a set of n selected frequency channels and simultaneously transmitting a signal having said HF waveform on the n frequency channels;
∘ said communication system further comprising means for implementing the adaptive communication method according to any one of claims 1 to 4.
